(19) **Europäisches Patentamt / European Patent Office / Office européen des brevets**

(11) **EP 4 768 517 A1**

(12) # EUROPEAN PATENT APPLICATION
published in accordance with Art. 153(4) EPC

(43) Date of publication:
**01.07.2026 Bulletin 2026/27**

(21) Application number: **24856846.1**

(22) Date of filing: **23.08.2024**

(51) International Patent Classification (IPC):
**C08G 63/672** *(2006.01)*   **C08G 63/183** *(2006.01)*
**C08G 63/199** *(2006.01)*   **C08G 63/78** *(2006.01)*
**C08G 63/85** *(2006.01)*   **C08G 63/83** *(2006.01)*
**C08K 5/521** *(2006.01)*   **C08K 5/00** *(2006.01)*

(52) Cooperative Patent Classification (CPC):
**C08G 63/183; C08G 63/199; C08G 63/672;
C08G 63/78; C08G 63/83; C08G 63/85; C08K 5/00;
C08K 5/521**

(86) International application number:
**PCT/KR2024/012594**

(87) International publication number:
**WO 2025/042235 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.08.2023 KR 20230111336**

(71) Applicant: **SK Chemicals Co., Ltd.
Seongnam-si, Gyeonggi-do 13494 (KR)**

(72) Inventors:
• **MOON, Jung-Me
  Seongnam-si, Gyeonggi-do 13494 (KR)**
• **KIM, Ha-Neul
  Seongnam-si, Gyeonggi-do 13494 (KR)**
• **OH, Hyun-Woo
  Seongnam-si, Gyeonggi-do 13494 (KR)**
• **LEE, Yoo Jin
  Seongnam-si, Gyeonggi-do 13494 (KR)**
• **HWANG, Da-Young
  Seongnam-si, Gyeonggi-do 13494 (KR)**

(74) Representative: **Dehns
10 Old Bailey
London EC4M 7NG (GB)**

(54) **HIGHLY HEAT-RESISTANT POLYESTER RESIN AND PREPARATION METHOD THEREFOR**

(57) The present invention relates to a highly heat-resistant polyester resin and a preparation method therefor. Specifically, according to one embodiment of the present invention, when the highly heat-resistant polyester resin is immersed in water at 90°C for seven days, the value, being greater than 0.05 and less than 0.5, of relation 1 ($\Delta H/Tg$) of the glass transition temperature (Tg) and the amount of change of haze ($\Delta H$) before and after immersion is satisfied, and thus high heat-resistance, which prevents shape deformation even if used in a microwave oven or the like, can be ensured without deterioration of properties such as transparency or mechanical properties.

## Description

## Technical Field

The present invention relates to a highly thermally resistant polyester resin and to a process for preparing the same.

## Background Art

Polyester resins are widely used as materials for fibers, films, sheets, packaging materials such as food containers, and automobile interior parts by virtue of their excellent mechanical properties and transparency. In particular, packaging materials for food are required to have durability and hydrolysis resistance to ensure the preservation of food, as well as high thermal resistance to the extent that the shape does not change even when used in microwave ovens.

In order to enhance the thermal resistance and hydrolysis resistance of a polyester resin, it is blended with other resins, or various additives are used. In such an event, there is a limit to enhancing the thermal resistance and hydrolysis resistance. Even if thermal resistance or hydrolysis resistance can be enhanced, there is a problem in that such properties as transparency or mechanical properties are deteriorated. Accordingly, research is ongoing to develop polyester resins that can secure the durability and hydrolysis resistance required for packaging materials for food, as well as high thermal resistance to the extent that the shape does not change even when used in microwave ovens, while such characteristics as transparency and mechanical properties are not deteriorated.

As an example, Korean Laid-open Patent Publication No. 2019-0064304 discloses a polyester resin having enhanced thermal resistance by copolymerizing a dicarboxylic acid compound comprising isophthalic acid and a diol compound comprising a cyclohexyl-based bisphenol compound. When the cyclohexyl-based bisphenol compound is employed, however, crystallinity is lowered, which deteriorates the viscosity characteristics and mechanical properties such as impact strength of the polyester resin.

[Prior Art Document]

(Patent Document 1) Korean Laid-open Patent Publication No. 2019-0064304

## Disclosure of Invention

## Technical Problem

Accordingly, the present invention aims to provide a highly thermally resistant polyester resin that can secure durability, hydrolysis resistance, and thermal resistance without deteriorating such characteristics as transparency and mechanical properties and a process for preparing the same.

## Solution to Problem

The highly thermally resistant polyester resin according to the present invention comprises a repeat unit derived from a diol component; and a repeat unit derived from an acid component, and satisfies the following Relationship 1.

$$[\text{Relationship 1}]$$

$$0.05 < \Delta H/Tg < 0.5$$

In Relationship 1, $\Delta H$ is the change in the haze before and after immersion (haze after immersion - haze before immersion) of a specimen having a thickness of 6 mm prepared from the highly thermally resistant polyester resin when it is immersed in water at 90°C for 7 days, and Tg is the glass transition temperature of the highly thermally resistant polyester resin.

The process for preparing the highly thermally resistant polyester resin according to another embodiment of the present invention comprises (a) preparing a composition comprising a diol component and an acid component; (b) subjecting the composition to an esterification reaction at 200°C to 300°C; and (c) subjecting the product of the esterification reaction to a polycondensation reaction at a temperature of 220°C to 350°C and a reduced pressure of 0.01 mmHg to 600 mmHg for 1 hour to 24 hours.

## Advantageous Effects of Invention

According to an embodiment of the present invention, the highly thermally resistant polyester resin satisfies that the value of Relationship 1 (ΔH/Tg), concerning the change in haze (ΔH) before and after immersion and the glass transition temperature (Tg) when it is immersed in water at 90°C for 7 days, is greater than 0.05 to less than 0.5. As a result, it can secure durability, hydrolysis resistance, and thermal resistance without deteriorating such characteristics as transparency and mechanical properties.

In particular, the highly thermally resistant polyester resin comprises a first diol comprising isosorbide (ISB) or a derivative thereof, a second diol comprising cyclohexanedimethanol (CHDM) or a derivative thereof, and a third diol different from the first diol and the second diol, wherein the contents of the first to third diols are each controlled to specific ranges. As a result, it has high thermal resistance to the extent that the shape does not change even when thermally treated at high temperatures, as well as excellent durability and hydrolysis resistance.

Accordingly, when the highly thermally resistant polyester resin is used as a packaging material for food, it can secure the durability and hydrolysis resistance required for a packaging material for food, as well as high thermal resistance to the extent that the shape does not change even when used in microwave ovens.

## Best Mode for Carrying out the Invention

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

In the present specification, in the case where an element is mentioned to be formed "on" or "under" another element, it means not only that one element is directly formed "on" or "under" another element, but also that one element is indirectly formed on or under another element with other element(s) interposed between them.

Throughout the present specification, the terms first, second, and the like are used to describe various components. But the components should not be limited by the terms. The terms are used only for the purpose of distinguishing one component from another.

## Highly thermally resistant polyester resin

The highly thermally resistant polyester resin according to the present invention comprises a repeat unit derived from a diol component; and a repeat unit derived from an acid component, and satisfies the following Relationship 1.

$$[\text{Relationship 1}]$$

$$0.05 < \Delta H/Tg < 0.5$$

In Relationship 1, ΔH is the change in the haze before and after immersion (haze after immersion - haze before immersion) of a specimen having a thickness of 6 mm prepared from the highly thermally resistant polyester resin when it is immersed in water at 90°C for 7 days, and Tg is the glass transition temperature of the highly thermally resistant polyester resin.

For example, ΔH/Tg according to Relationship 1 may be greater than 0.05 to less than 0.5, greater than 0.05 to 0.4, 0.06 to 0.35, 0.06 to 0.28, or 0.07 to 0.25. As ΔH/Tg according to Relationship 1 satisfies the above range, high thermal resistance can be secured without deterioration of hydrolysis resistance under high temperature and moisture conditions.

Specifically, the highly thermally resistant polyester resin may have a glass transition temperature (Tg) of 110°C or higher. For example, the glass transition temperature of the highly thermally resistant polyester resin may be 112°C or higher, 115°C or higher, 116°C or higher, 120°C or higher, higher than 120°C, 122°C or higher, 124°C or higher, 126°C or higher, 130°C or higher, 132°C or higher, or 134°C or higher.

In addition, the change in the haze before and after immersion (ΔH, haze after immersion - haze before immersion) of a specimen having a thickness of 6 mm prepared from the highly thermally resistant polyester resin when it is immersed in water at 90°C for 7 days may be 30% or less. For example, the change in haze (ΔH) may be 30% or less, 29% or less, 27% or less, 25% or less, 24.5% or less, 24% or less, 20% or less, 18% or less, 12% or less, 10% or less, 8% or less, or 7% or less.

The highly thermally resistant polyester resin has a high glass transition temperature of 110°C or higher, and the change in the haze before and after immersion is small when it is immersed in water at 90°C for 7 days, which is a high temperature and moisture condition; thus, high thermal resistance and hydrolysis resistance can be secured at the same time. As a result, its characteristics such as transparency are not deteriorated even when it is exposed to high temperature and moisture conditions, and its shape does not change even when it is used in a microwave oven; thus, it has excellent quality when used as a packaging material for food.

In addition, the highly thermally resistant polyester resin, based on a specimen prepared using the same and having a thickness of 6 mm, may have a haze ($H_1$) measured before immersion of 1.5% or less, 1.45% or less, 1.25% or less, 1.1% or less, 0.9% or less, or 0.8% or less. In addition, the haze ($H_2$) measured after the specimen is immersed in water at 90°C for 7 days may be 30% or less, 28% or less, 26% or less, 19% or less, 15% or less, 13% or less, 8% or less, or 7% or less. A specimen prepared from the highly thermally resistant polyester resin has a very low haze, and the haze is not increased significantly even under high temperature and moisture conditions as described above, indicating excellent hydrolysis resistance.

In addition, the highly thermally resistant polyester resin may have an intrinsic viscosity (IV) of 0.55 dl/g or more. For example, the intrinsic viscosity (IV) of the highly thermally resistant polyester resin may be 0.58 dl/g or more, 0.60 or more, 0.62 dl/g or more, 0.63 dl/g or more, 0.7 dl/g or more, or 0.75 dl/g or more, and may be 0.55 dl/g to 0.8 dl/g, 0.56 dl/g to 0.75 dl/g, or 0.58 dl/g to 0.72 dl/g.

As the intrinsic viscosity satisfies the above range, it is possible to secure mechanical properties such as impact strength. Specifically, even if the composition and contents of resins are the same, the mechanical properties, especially the impact strength characteristics, may vary depending on the intrinsic viscosity; thus, it is important to control the intrinsic viscosity, along with the composition and contents of resins, in order to enhance mechanical properties such as impact strength without deteriorating such properties as transparency and thermal resistance.

In addition, a specimen prepared from the highly thermally resistant polyester resin and having a thickness of 3.2 mm may have an impact strength of 700 J/m or more when measured according to ASTM D256. For example, a specimen prepared from the highly thermally resistant polyester resin and having a thickness of 3.2 mm may have an impact strength of 750 J/m or more, 770 J/m or more, 780 J/m or more, 820 J/m or more, or 850 J/m or more, when measured according to ASTM D256.

Conventionally, research to enhance the thermal resistance and impact strength of polyester resins has been continued; however, there is a limit to enhancing thermal resistance and hydrolysis resistance. Even if thermal resistance or hydrolysis resistance can be enhanced, there is a problem in that such properties as transparency and mechanical properties are deteriorated. Thus, it has been difficult to secure such mechanical properties as thermal resistance, hydrolysis resistance, transparency, and impact strength altogether.

Impact strength changes sensitively with respect to the thickness of a specimen, especially as it gets thicker. The highly thermally resistant polyester resin according to an embodiment of the present invention has a glass transition temperature and a change in haze (ΔH) controlled to satisfy the above Relationship 1. As a result, it has excellent impact strength as compared with conventional resins that usually have an impact strength of 310 J/m or less when measured according to ASTM D256 for a specimen prepared therefrom and having a thickness of 3.2 mm. In particular, the highly thermally resistant polyester resin can secure excellent impact resistance as the composition of the diol component is adjusted to a specific range, and such properties as intrinsic viscosity and glass transition temperature are controlled as well.

According to an embodiment of the present invention, the highly thermally resistant polyester resin comprises a repeat unit derived from a diol component; and a repeat unit derived from an acid component.

Specifically, the diol component may comprise (1) 25% by mole to 45% by mole of a first diol comprising isosorbide (ISB) or a derivative thereof; (2) 45% by mole to 75% by mole of a second diol comprising cyclohexanedimethanol (CHDM) or a derivative thereof; and (3) 0% by mole to 25% by mole of a third diol different from the first diol and the second diol.

The diol component may comprise a first diol comprising isosorbide (ISB) or a derivative thereof and may comprise the first diol in an amount of 25% by mole to 45% by mole based on the total number of moles of the diol component. For example, the highly thermally resistant polyester resin may be a resin in which a diol component and an acid component are copolymerized, wherein the content of the first diol may be 25% by mole to 42% by mole, 26% by mole to 40% by mole, 25% by mole to 39% by mole, 28% by mole to 41% by mole, 28% by mole to 39% by mole, 30% by mole to 39% by mole, or 28% by mole to 35% by mole, based on the entire diol-derived residues in the highly thermally resistant polyester resin.

As the content of the first diol satisfies the above range, it is possible to secure excellent thermal resistance without deteriorating characteristics such as transparency or mechanical properties. Specifically, if the content of the first diol is less than 25% by mole, it is difficult to secure sufficient thermal resistance for use in materials such as packaging materials for food, especially high thermal resistance to the extent that the shape does not change even when used in microwave ovens. If the content of the first diol exceeds 45% by mole, characteristics such as transparency and mechanical properties may be deteriorated.

In addition, the diol component may comprise a second diol comprising cyclohexanedimethanol (CHDM) or a derivative thereof and may comprise the second diol in an amount of 45% by mole to 75% by mole based on the total number of moles of the diol component. For example, the content of the second diol may be 45% by mole to 73% by mole, 46% by mole to 73% by mole, 46% by mole to 72% by mole, 46% by mole to 70% by mole, or 46% by mole to 68% by mole, based on the entire diol-derived residues in the highly thermally resistant polyester resin.

As the content of the second diol satisfies the above range, it is possible to enhance hydrolysis resistance and mechanical properties such as impact strength without deteriorating thermal resistance. Specifically, if the content of the second diol is less than 45% by mole, the mechanical properties such as impact strength may be deteriorated, which deteriorates the durability or lifespan characteristics of a product prepared from the highly thermally resistant polyester resin. If the content of the second diol exceeds 75% by mole, the crystal characteristics may increase due to the reactivity with the first diol, which significantly deteriorates transparency and hydrolysis resistance.

In addition, the molar ratio of the first diol to the second diol may be 1:1 to 3.2. For example, the molar ratio of the first diol to the second diol may be 1:1.2 to 3, 1:1.25 to 2.8, 1:1 to 2.6, 1:1.3 to 2.6, 1:1.5 to 3, 1:1.7 to 2.8, 1:1.8 to 3.2, 1:2 to 2.8, or 1:2.1 to 2.8.

Isosorbide has been used in the preparation of polyester resins in that it can enhance thermal resistance by increasing the glass transition temperature, whereas it may deteriorate such mechanical properties as transparency, color characteristics, and impact strength. Thus, research to resolve these problems has continued.

The highly thermally resistant polyester resin according to an embodiment of the present invention comprises 25% by mole to 45% by mole of isosorbide, wherein the molar ratio of the first diol and the second diol satisfies the above range. As a result, it is possible to secure high thermal resistance without deteriorating transparency, color characteristics, and mechanical properties such as impact strength.

In addition, the diol component may comprise a third diol different from the first diol and the second diol and may comprise the third diol in an amount of 0% by mole to 25% by mole based on the total number of moles of the diol component. For example, the content of the third diol may be 0% by mole to 20% by mole, 1% by mole to 25% by mole, 3% by mole to 20% by mole, 4.5% by mole to 15% by mole, 5% by mole to 13% by mole, or 5% by mole to 12% by mole, based on the entire diol-derived residues in the highly thermally resistant polyester resin.

The third diol may comprise at least one selected from the group consisting of bis-2-hydroxyethyl terephthalate, recycled bis-2-hydroxyethyl terephthalate, diethylene glycol, triethylene glycol, 1,2-propanediol, 1,3-propanediol, 1,4-butanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 2,3-butanediol, 3-methyl-1,5-pentanediol, 3-methyl-2,4-pentanediol, 1,6-hexanediol, and derivatives thereof.

According to an embodiment of the present invention, it is important to adjust the contents of the first diol to the third diol in the highly thermally resistant polyester resin.

Specifically, in order to achieve the physical properties desired in the present invention, more specifically to enhance thermal resistance and hydrolysis resistance without deteriorating characteristics such as transparency and mechanical properties, it is very important to adjust the contents of the first diol to the third diol in the highly thermally resistant polyester resin. Therefore, according to an embodiment of the present invention, as the contents of the first diol to the third diol satisfy the above respective ranges, it is possible to secure high thermal resistance to the extent that the shape does not change even when thermally treated at high temperatures. Accordingly, when the highly thermally resistant polyester resin is used as a packaging material for food, it can secure the durability and hydrolysis resistance required for a packaging material for food, as well as high thermal resistance to the extent that the shape does not change even when used in microwave ovens.

In addition, the acid component may be a dicarboxylic acid or a derivative thereof.

For example, the acid component may comprise at least one selected from the group consisting of terephthalic acid, dimethyl terephthalate, isophthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

Specifically, the acid component may be terephthalic acid or a derivative thereof, more specifically, the acid component may be terephthalic acid or dimethyl terephthalate, but it is not limited thereto. For example, the highly thermally resistant polyester resin may comprise a residue derived from terephthalic acid or a residue derived from dimethyl terephthalate in an amount of 100% by mole, 98% by mole or less, 95% by mole or less, or 90% by mole or less, based on the entire acid-derived residues in the highly thermally resistant polyester resin.

According to another embodiment of the present invention, while the acid component comprises terephthalic acid or a derivative thereof, it may further comprise a dicarboxylic acid or a derivative thereof different from terephthalic acid or a derivative thereof. For example, the acid component may comprise terephthalic acid and isophthalic acid, or dimethyl terephthalate and isophthalic acid, wherein the content of terephthalic acid or dimethyl terephthalate may be 90% by mole to 99% by mole, 92% by mole to 98% by mole, 93% by mole to 97% by mole, or 94% by mole to 96% by mole, and the content of isophthalic acid may be 1% by mole to 10% by mole, 2% by mole to 8% by mole, 3% by mole to 7% by mole, or 4% by mole to 6% by mole, based on the entire acid-derived residues in the highly thermally resistant polyester resin.

According to an embodiment of the present invention, the highly thermally resistant polyester resin may further comprise at least one additive selected from the group consisting of a colorant, a crystallizing agent, an oxidation stabilizer, and a branching agent.

The colorant is an additive for enhancing the color characteristics of the highly thermally resistant polyester resin. Commonly used colorants such as cobalt acetate and cobalt propionate may be used as the colorant as long as the effects of the present invention are not impaired.

Specifically, the colorant may be cobalt acetate, cobalt propionate, anthraquinone-based compounds, perinone-based compounds, azo-based compounds, and methine-based compounds. Commercially available toners such as Polysynthren Blue RLS of Clariant or Solvaperm Red BB of Clariant may be used.

In addition, the highly thermally resistant polyester resin may comprise the colorant in an amount of 0.1 ppm to 40 ppm based on the total weight of the highly thermally resistant polyester resin. For example, the content of the colorant may be 1 ppm to 40 ppm, 3 ppm to 35 ppm, 5 ppm to 30 ppm, or 10 ppm to 30 ppm, based on the total weight of the highly thermally resistant polyester resin. As the content of the colorant satisfies the above range, the color characteristics of the highly thermally resistant polyester resin may be sufficiently enhanced without deteriorating its mechanical properties.

The crystallizing agent may comprise at least one selected from the group consisting of a crystal nucleating agent, a UV absorber, a polyolefin resin, a polyamide resin, and a polyalkylene resin.

In addition, the highly thermally resistant polyester resin may comprise the crystallizing agent in an amount of 0.1 ppm to 10 ppm based on the total weight of the highly thermally resistant polyester resin. For example, the content of the crystallizing agent may be 0.2 ppm to 8 ppm, 0.5 ppm to 6 ppm, 1 ppm to 10 ppm, 2 ppm to 8 ppm, 3 ppm to 6 ppm, or 4 ppm to 6 ppm, based on the total weight of the highly thermally resistant polyester resin. As the content of the crystallizing agent satisfies the above range, thermal resistance and impact strength can be enhanced.

The oxidation stabilizer may comprise at least one selected from the group consisting of hindered phenol-based oxidation stabilizers, phosphorous-based oxidation stabilizers, and thioether-based oxidation stabilizers.

In addition, the highly thermally resistant polyester resin may comprise the oxidation stabilizer in an amount of 50 ppm to 2,500 ppm based on the total weight of the highly thermally resistant polyester resin. For example, the content of the oxidation stabilizer may be 50 ppm to 2,300 ppm, 60 ppm to 2,200 ppm, 80 ppm to 2,100 ppm, 100 ppm to 2,000 ppm, or 100 ppm to 1,500 ppm, based on the total weight of the highly thermally resistant polyester resin. As the content of the oxidation stabilizer satisfies the above range, it is possible to effectively prevent a decrease in intrinsic viscosity that may occur in a subsequent process and to prevent a decrease in physical properties such as impact strength as well.

The branching agent may comprise at least one selected from the group consisting of trimellitic anhydride, trimethylol propane, and trimellitic acid.

In addition, the highly thermally resistant polyester resin may comprise the branching agent in an amount of 100 ppm to 2,500 ppm based on the total weight of the highly thermally resistant polyester resin. For example, the branching agent may be employed in an amount of 150 ppm to 2,000 ppm, 200 ppm to 1,800 ppm, 300 ppm to 1,500 ppm, or 300 ppm to 1,000 ppm, based on the total weight of the highly thermally resistant polyester resin. As the content of the branching agent satisfies the above range, the intrinsic viscosity may be more effectively controlled within a specific range, so that such physical properties as impact strength may be enhanced as well.

**Process for preparing the highly thermally resistant polyester resin**

The process for preparing the highly thermally resistant polyester resin according to another embodiment of the present invention comprises (a) preparing a composition comprising a diol component and an acid component; (b) subjecting the composition to an esterification reaction at 200°C to 300°C; and (c) subjecting the product of the esterification reaction to a polycondensation reaction at a temperature of 220°C to 350°C and a reduced pressure of 0.01 mmHg to 600 mmHg for 1 hour to 24 hours.

A highly thermally resistant polyester resin prepared according to the process for preparing the highly thermally resistant polyester resin has substantially the same composition and characteristics as those of the highly thermally resistant polyester resin described above.

In addition, the composition and process conditions may be adjusted, so that the highly thermally resistant polyester resin finally prepared according to the process for preparing the highly thermally resistant polyester resin satisfies the properties such as transparency, thermal resistance, hydrolysis resistance, and mechanical properties such as impact strength as described above.

First, a composition comprising a diol component and an acid component is prepared (step (a)).

Details on the diol component and acid component are as described above.

The molar ratio (G/A) of the diol component to the acid component added in step (a) may be 1.10 to 3.00. For example, the molar ratio (G/A) of the diol component to the acid component added in step (a) may be 1.15 to 2.20, 1.20 to 2.00, 1.20 to 1.50, and 1.20 to 1.25. As the molar ratio (G/A) of the diol component to the acid component satisfies the above range, productivity can be enhanced without deterioration of transparency, and thermal resistance, hydrolysis resistance, and mechanical properties such as impact strength can be secured.

In addition, at least one additive selected from the group consisting of a colorant, a crystallizing agent, an oxidation stabilizer, and a branching agent may be further added to the composition. Details on the additive are as described above.

The composition is subjected to an esterification reaction at 200°C to 300°C (step (b)).

The esterification reaction may be carried out at a pressure higher than normal pressure by 0.1 kg/cm$^2$ to 3.0 kg/cm$^2$ and a temperature of 200°C to 300°C for 1.5 hours to 10 hours.

The pressure may be higher than normal pressure by 0.1 kg/cm$^2$ to 3.0 kg/cm$^2$, 0.2 kg/cm$^2$ to 2.5 kg/cm$^2$, 0.3 kg/cm$^2$ to 2.2 kg/cm$^2$, 0.5 kg/cm$^2$ to 2.0 kg/cm$^2$, or 0.5 kg/cm$^2$ to 1.0 kg/cm$^2$.

In addition, the esterification reaction may be carried out at a temperature of 245°C to 280°C, 250°C to 275°C, or 255°C to 270°C, for 1.5 hours to 8 hours, 1.5 hours to 6 hours, or 2 hours to 4 hours.

More specifically, the esterification reaction may be carried out in the steps of (b-1) injecting nitrogen into the reactor containing the composition to set the pressure higher than normal pressure by 0.1 kg/cm$^2$ to 3.0 kg/cm$^2$; (b-2) raising the temperature of the reactor from room temperature to 210°C to 230°C over 60 minutes to 120 minutes and then maintaining the state for 1 hour to 3 hours; and (b-3) raising the temperature to 245°C to 275°C over 1 hour to 3 hours and then subjecting the composition to an esterification reaction.

Step (b-2) may be a step of raising the temperature of the reactor from room temperature to 210°C to 230°C or 215°C to 225°C over 70 minutes to 110 minutes or 80 minutes to 100 minutes and then maintaining the state for 1 hour to 3 hours or 1 hour to 2 hours.

Upon completion of the esterification reaction, the pressure of the reactor in a pressurized state is lowered to normal pressure, and then a polycondensation reaction to be described below may be carried out.

The product of the esterification reaction is subjected to a polycondensation reaction at a temperature of 220°C to 350°C and a reduced pressure of 0.01 mmHg to 600 mmHg for 1 hour to 24 hours.

For example, the polycondensation reaction may be carried out at a temperature of 230°C to 320°C, 250°C to 295°C, 260°C to 290°C, or 265°C to 280°C and a pressure of 0.01 mmHg to 400 mmHg, 0.05 mmHg to 200 mmHg, 0.1 mmHg to 50 mmHg, 0.2 mmHg to 10 mmHg, 0.2 mmHg to 3 mmHg, 0.3 mmHg to 1.5 mmHg, or 0.5 mmHg to 1 mmHg, for 1 hour to 20 hours, 2 hours to 16 hours, or 3 hours to 10 hours.

Specifically, the polycondensation reaction may be carried out in the steps of (c-1) reducing the pressure of the product of the esterification reaction to 4.0 mmHg to 6.0 mmHg over 10 minutes to 60 minutes, and (c-2) raising the temperature to 220°C to 350°C over 0.5 hour to 2 hours and then carrying out a polycondensation reaction while maintaining a pressure of 0.01 mmHg to 600 mmHg.

Step (c-1) may be a step of reducing the pressure of the product of the esterification reaction to 4.0 mmHg to 6.0 mmHg or 4.5 mmHg to 5.5 mmHg over 20 minutes to 50 minutes or 25 minutes to 40 minutes.

In addition, in step (c-2), the temperature may be raised to 250°C to 320°C, 255°C to 285°C, 260°C to 285°C, or 265°C to 280°C, over 0.5 hour to 2 hours or 0.8 hour to 1.5 hours.

At the beginning of the polycondensation reaction, the stirring speed may be set high. As the polycondensation reaction proceeds, when the stirring power is weakened due to the increase in the viscosity of the reactant or the temperature of the reactant rises above the set temperature, the stirring speed may be appropriately adjusted accordingly.

The polycondensation reaction may be carried out until the intrinsic viscosity (IV) of the polycondensation reactants becomes 0.55 dl/g or more, 0.58 dl/g or more, 0.60 or more, 0.62 dl/g or more, 0.63 dl/g or more, 0.7 dl/g or more, 0.75 dl/g or more, or 0.55 dl/g to 0.8 dl/g, 0.56 dl/g to 0.75 dl/g, or 0.58 dl/g to 0.72 dl/g.

In addition, a catalyst and/or a stabilizer may be further added in the esterification reaction and the polycondensation reaction.

For example, the catalyst for an esterification reaction may be methylates of sodium and magnesium; acetates, borates, fatty acid salts, and carbonates of Zn, Cd, Mn, Co, Ca, and Ba; metallic Mg; and oxides of Pb, Zn, Sb, and Ge.

In addition, the catalyst for a polycondensation reaction may be, for example, titanium-based catalysts such as tetraethyl titanate, acetyl tripropyl titanate, tetrapropyl titanate, tetrabutyl titanate, polybutyl titanate, 2-ethylhexyl titanate, octylene glycol titanate, lactate titanate, triethanolamine titanate, acetyl acetonate titanate, ethyl acetoacetic ester titanate, isostearyl titanate, titanium dioxide, titanium dioxide/silicon dioxide copolymers, titanium dioxide/zirconium dioxide copolymers; germanium-based catalysts such as germanium dioxide and copolymers using the same; or tin-based catalysts such as monobutyltin oxide, dibutyltinoxide, and monobutylhydroxytinoxide.

In a specific embodiment, a catalyst is further added in step (a), wherein the catalyst may comprise a germanium element or a tin element or may be a zinc-based catalyst.

In addition, the stabilizer may be a phosphorus-based compound such as phosphoric acid, trimethyl phosphate, and triethyl phosphate may be used, but it is not limited thereto.

The stabilizer may be employed in an amount of 1 ppm to 2,500 ppm based on the total weight of the highly thermally resistant polyester resin. For example, the stabilizer may be employed in an amount of 1 ppm to 2,300 ppm, 5 ppm to 2,000 ppm, 10 ppm to 1,500 ppm, 20 ppm to 400 ppm, 30 ppm to 350 ppm, or 50 ppm to 300 ppm, based on the total weight of the highly thermally resistant polyester resin.

In a specific embodiment, a stabilizer is further added in step (a), wherein the stabilizer may comprise at least one compound selected from the group consisting of phosphoric acid, trimethyl phosphate, triethyl phosphate, triphenyl phosphate, and triethyl phosphonoacetate.

### Molded Article

The molded article according to another embodiment of the present invention comprises the highly thermally resistant polyester resin.

For example, the molded article may be containers for various food and beverage, packaging materials, medical devices, or thermally-resistant sheets, but it is not limited thereto.

In addition, the molded article may be obtained by injection molding the highly thermally resistant polyester resin. For example, the molded article may be prepared by injection molding the highly thermally resistant polyester resin at 260°C to 350°C, 265°C to 320°C, or 270°C to 300°C. The highly thermally resistant polyester resin has excellent thermal resistance; thus, even if injection molding is performed at a high temperature as described above, the shape is not distorted or deformed during molding, resulting in excellent processability. The molded article prepared therefrom is not deformed even when heated, such as when used in a microwave oven; thus, its quality is excellent.

### Mode for the Invention

Hereinafter, the present invention will be described in more detail with reference to the following examples. However, these examples are set forth to illustrate the present invention, and the scope of the present invention is not limited thereto.

### Preparation of a highly thermally resistant polyester resin

### Example 1

(a) Preparation of a composition

A 10-liter reactor equipped with a column and a condenser that can be cooled by water was charged with terephthalic acid (TPA, 2,209 g), ethylene glycol (EG, 66 g), cyclohexanedimethanol (CHDM, 1,246 g), and isosorbide (ISB, 1,010 g). Here, G/A (total diol/total acid; molar ratio of the diol component to the acid component) was 1.25.

Thereafter, 2.5 g of $GeO_2$ as a catalyst, 5.0 g of phosphoric acid as a stabilizer, 0.2 g of cobalt acetate as a colorant, 0.022 g of a blue toner (product name: Polysynthren Blue RLS, manufacturer: Clariant), 0.004 g of a red toner (product name: Solvaperm Red BB, manufacturer: Clariant), and 0.36 g of a hindered phenolic oxidation stabilizer (product name: Irganox 1076, manufacturer: BASF) were added thereto, followed by stirring them to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 268°C over 2 hours. Thereafter, an esterification reaction was carried out at a temperature of 268°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 278°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.68 dl/g. The mixture was then discharged to the outside of the reactor to form strands, which were solidified with a cooling liquid and then granulated to have an average weight of about 12 mg to 14 mg to prepare a highly thermally resistant polyester resin.

**Example 2**

(a) Preparation of a composition

A 10-liter reactor equipped with a column and a condenser that can be cooled by water was charged with terephthalic acid (TPA, 2,297 g), cyclohexanedimethanol (CHDM, 1,435 g), and isosorbide (ISB, 970 g). Here, G/A (total diol/total acid; molar ratio of the diol component to the acid component) was 1.2.

Thereafter, 2.5 g of $GeO_2$ as a catalyst, 5.0 g of phosphoric acid as a stabilizer, 0.030 g of a blue toner (product name: Polysynthren Blue RLS, manufacturer: Clariant), and 0.007 g of a red toner (product name: Solvaperm Red BB, manufacturer: Clariant) were added thereto, followed by stirring them to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 264°C over 2 hours. Thereafter, an esterification reaction was carried out at a temperature of 264°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 268°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.71 dl/g. The mixture was then discharged to the outside of the reactor to form strands, which were solidified with a cooling liquid and then granulated to have an average weight of about 12 mg to 14 mg to prepare a highly thermally resistant polyester resin.

**Example 3**

(a) Preparation of a composition

A 10-liter reactor equipped with a column and a condenser that can be cooled by water was charged with terephthalic acid (TPA, 2,201 g), ethylene glycol (EG, 140 g), cyclohexanedimethanol (CHDM, 1,050 g), and isosorbide (ISB, 968 g). Here, G/A (total diol/total acid; molar ratio of the diol component to the acid component) was 1.22.

Thereafter, 2.5 g of $GeO_2$ as a catalyst, 5.0 g of phosphoric acid as a stabilizer, 0.3 g of cobalt acetate as a colorant, 0.018 g of a blue toner (product name: Polysynthren Blue RLS, manufacturer: Clariant), 0.004 g of a red toner (product name: Solvaperm Red BB, manufacturer: Clariant), and 3.5 g of a hindered phenolic oxidation stabilizer (product name: Irganox 1076, manufacturer: BASF) were added thereto, followed by stirring them to prepare a composition.

(b) Esterification reaction

Subsequently, nitrogen was injected into the reactor containing the composition to make the pressure in the reactor higher than normal pressure by 0.5 kgf/cm$^2$ (absolute pressure: 1,127.8 mmHg). Then, the temperature of the reactor was raised from room temperature to 220°C over 90 minutes and maintained at 220°C for 2 hours, and the temperature was then raised again to 258°C over 2 hours. Thereafter, an esterification reaction was carried out at a temperature of 258°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 273°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.65 dl/g. The mixture was then discharged to the outside of the reactor to form strands, which were solidified with a cooling liquid and then granulated to have an average weight of about 12 mg to 14 mg to prepare a highly thermally resistant polyester resin.

**Example 4**

(a) Preparation of a composition

A 10-liter reactor equipped with a column and a condenser that can be cooled by water was charged with terephthalic acid (TPA, 2,608 g), isophthalic acid (IPA, 137 g), ethylene glycol (EG, 308 g), cyclohexanedimethanol (CHDM, 1,191 g), and isosorbide (ISB, 917 g). Here, G/A (total diol/total acid; molar ratio of the diol component to the acid component) was 1.24.
Thereafter, 2.5 g of $GeO_2$ as a catalyst, 5.0 g of phosphoric acid as a stabilizer, 0.025 g of a blue toner (product name: Polysynthren Blue RLS, manufacturer: Clariant), 0.006 g of a red toner (product name: Solvaperm Red BB, manufacturer: Clariant), and 1.26 g of trimellitic anhydride as a branching agent were added thereto, followed by stirring them to prepare a composition.

(b) Esterification reaction

Subsequently, nitrogen was injected into the reactor containing the composition to make the pressure in the reactor higher than normal pressure by 0.7 kgf/cm$^2$ (absolute pressure: 1,274.9 mmHg). Then, the temperature of the reactor was raised from room temperature to 220°C over 90 minutes and maintained at 220°C for 2 hours, and the temperature was then raised again to 263°C over 2 hours. Thereafter, an esterification reaction was carried out at a temperature of 263°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 268°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.66 dl/g. The mixture was then discharged to the outside of the reactor to form strands, which were solidified with a cooling liquid and then granulated to have an average weight of about 12 mg to 14 mg to prepare a highly thermally resistant polyester resin.

**Example 5**

(a) Preparation of a composition

A 10-liter reactor equipped with a column and a condenser that can be cooled by water was charged with terephthalic acid (TPA, 1,936 g), ethylene glycol (EG, 101 g), cyclohexanedimethanol (CHDM, 840 g), and isosorbide (ISB, 988 g). Here, G/A (total diol/total acid; molar ratio of the diol component to the acid component) was 1.22.

Thereafter, 2.5 g of $GeO_2$ as a catalyst, 5.0 g of phosphoric acid as a stabilizer, 0.4 g of cobalt acetate as a colorant, 0.016 g of a blue toner (product name: Polysynthren Blue RLS, manufacturer: Clariant), 0.003 g of a red toner (product name: Solvaperm Red BB, manufacturer: Clariant), 6.2 g of a hindered phenolic oxidation stabilizer (product name: Irganox 1076, manufacturer: BASF), and 3.1 g of trimellitic anhydride as a branching agent were added thereto, followed by stirring them to prepare a composition.

(b) Esterification reaction

Subsequently, nitrogen was injected into the reactor containing the composition to make the pressure in the reactor higher than normal pressure by 0.8 kgf/cm$^2$ (absolute pressure: 1,348.5 mmHg). Then, the temperature of the reactor was raised from room temperature to 220°C over 90 minutes and maintained at 220°C for 2 hours, and the temperature was then raised again to 268°C over 2 hours. Thereafter, an esterification reaction was carried out at a temperature of 268°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 278°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.59 dl/g. The mixture was then discharged to the outside of the reactor to form strands, which were solidified with a cooling liquid and then granulated to have an average weight of about 12 mg to 14 mg to prepare a highly thermally resistant polyester resin.

**Comparative Example 1**

(a) Preparation of a composition

A 10-liter reactor equipped with a column and a condenser that can be cooled by water was charged with terephthalic acid (TPA, 2,409 g), ethylene glycol (EG, 288 g), cyclohexanedimethanol (CHDM, 1,567 g), and isosorbide (ISB, 381 g). Here, G/A (total diol/total acid; molar ratio of the diol component to the acid component) was 1.25.

Thereafter, 2.5 g of $GeO_2$ as a catalyst, 5.0 g of phosphoric acid as a stabilizer, 0.3 g of cobalt acetate as a colorant, 0.023 g of a blue toner (product name: Polysynthren Blue RLS, manufacturer: Clariant), 0.004 g of a red toner (product name: Solvaperm Red BB, manufacturer: Clariant), and 0.38 g of a hindered phenolic oxidation stabilizer (product name: Irganox 1076, manufacturer: BASF) were added thereto, followed by stirring them to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 260°C over 2 hours. Thereafter, an esterification reaction was carried out at a temperature of 260°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 275°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactants or the temperature of the reactants rose above the set temperature, the stirring speed was appropriately adjusted accordingly. The polycondensation reaction was carried out until the intrinsic viscosity (IV) of the mixture (melt) in the reactor reached 0.72 dl/g. The mixture was then discharged to the outside of the reactor to form strands, which were solidified with a cooling liquid and then granulated to have an average weight of about 12 mg to 14 mg to prepare a highly thermally resistant polyester resin.

**Comparative Example 2**

(a) Preparation of a composition

A 10-liter reactor equipped with a column and a condenser that can be cooled by water was charged with terephthalic acid (TPA, 2,470 g), ethylene glycol (EG, 157 g), cyclohexanedimethanol (CHDM, 1,393 g), and isosorbide (ISB, 782 g). Here, G/A (total diol/total acid; molar ratio of the diol component to the acid component) was 1.18.
Thereafter, 2.5 g of $GeO_2$ as a catalyst, 5.0 g of phosphoric acid as a stabilizer, 0.2 g of cobalt acetate as a colorant, 0.031 g of a blue toner (product name: Polysynthren Blue RLS, manufacturer: Clariant), and 0.007 g of a red toner (product name: Solvaperm Red BB, manufacturer: Clariant) were added thereto, followed by stirring them to prepare a composition.

(b) Esterification reaction

Subsequently, nitrogen was injected into the reactor containing the composition to make the pressure in the reactor higher than normal pressure by 1.0 kgf/cm$^2$ (absolute pressure: 1,495.6 mmHg). Then, the temperature of the reactor was raised from room temperature to 220°C over 90 minutes and maintained at 220°C for 2 hours, and the temperature was then raised again to 270°C over 2 hours. Thereafter, an esterification reaction was carried out at a temperature of 270°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 280°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.66 dl/g. The mixture was then discharged to the outside of the reactor to form strands, which were solidified with a cooling liquid and then granulated to have an average weight of about 12 mg to 14 mg to prepare a highly thermally resistant polyester resin.

**Comparative Example 3**

(a) Preparation of a composition

A 10-liter reactor equipped with a column and a condenser that can be cooled by water was charged with terephthalic acid (TPA, 2,621 g), ethylene glycol (EG, 176 g), cyclohexanedimethanol (CHDM, 1,842 g), and isosorbide (ISB, 369 g). Here, G/A (total diol/total acid; molar ratio of the diol component to the acid component) was 1.15.
Thereafter, 2.5 g of $GeO_2$ as a catalyst, 5.0 g of phosphoric acid as a stabilizer, 0.021 g of a blue toner (product name: Polysynthren Blue RLS, manufacturer: Clariant), and 0.003 g of a red toner (product name: Solvaperm Red BB, manufacturer: Clariant) were added thereto, followed by stirring them to prepare a composition.

(b) Esterification reaction

Subsequently, nitrogen was injected into the reactor containing the composition to make the pressure in the reactor higher than normal pressure by 0.5 kgf/cm$^2$ (absolute pressure: 1,127.8 mmHg). Then, the temperature of the reactor was raised from room temperature to 220°C over 90 minutes and maintained at 220°C for 2 hours, and the temperature was then raised again to 264°C over 2 hours. Thereafter, an esterification reaction was carried out at a temperature of 264°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 278°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.76 dl/g. The mixture was then discharged to the outside of the reactor to form strands, which were solidified with a cooling liquid and then granulated to have an average weight of about 12 mg to 14 mg to prepare a highly thermally resistant polyester resin.

**Comparative Example 4**

(a) Preparation of a composition

A 10-liter reactor equipped with a column and a condenser that can be cooled by water was charged with terephthalic acid (TPA, 2,683 g), ethylene glycol (EG, 230 g), cyclohexanedimethanol (CHDM, 931 g), and isosorbide (ISB, 1,298 g). Here, G/A (total diol/total acid; molar ratio of the diol component to the acid component) was 1.18.
Thereafter, 2.5 g of GeO$_2$ as a catalyst, 5.0 g of phosphoric acid as a stabilizer, 0.024 g of a blue toner (product name: Polysynthren Blue RLS, manufacturer: Clariant) and 0.004 g of a red toner (product name: Solvaperm Red BB, manufacturer: Clariant), and 6 g of a hindered phenolic oxidation stabilizer (product name: Irganox 1076, manufacturer: BASF) were added thereto, followed by stirring them to prepare a composition.

(b) Esterification reaction

Subsequently, nitrogen was injected into the reactor containing the composition to make the pressure in the reactor higher than normal pressure by 0.8 kgf/cm$^2$ (absolute pressure: 1,348.5 mmHg). Then, the temperature of the reactor was raised from room temperature to 220°C over 90 minutes and maintained at 220°C for 2 hours, and the temperature was then raised again to 268°C over 2 hours. Thereafter, an esterification reaction was carried out at a temperature of 268°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 268°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.54 dl/g. The mixture was then discharged to the outside of the reactor to form strands, which were solidified with a cooling liquid and then granulated to have an average weight of about 12 mg to 14 mg to prepare a highly thermally resistant polyester resin.

**Comparative Example 5**

(a) Preparation of a composition

A 10-liter reactor equipped with a column and a condenser that can be cooled by water was charged with terephthalic acid (TPA, 2,000 g), cyclohexanedimethanol (CHDM, 1,194 g), and isosorbide (ISB, 726 g). Here, G/A (total diol/total acid; molar ratio of the diol component to the acid component) was 1.10.
Thereafter, 1.39 g of dibutyltin oxide as a catalyst and 1.65 g of a hindered phenolic oxidation stabilizer (product name: Irganox, manufacturer: BASF) were added thereto, followed by stirring them to prepare a composition.

(b) Esterification reaction

Subsequently, nitrogen was injected into the reactor containing the composition to make the pressure in the reactor higher than normal pressure by 6.6 kgf/cm$^2$ (absolute pressure: 4,119.4 mmHg). Then, the temperature of the reactor was raised from room temperature to 220°C over 90 minutes and maintained at 220°C for 2 hours, and the temperature was then raised again to 275°C over 2 hours. Thereafter, an esterification reaction was carried out at a temperature of 275°C for 3 hours until the composition became transparent while the composition in the reactor was visually observed. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

(c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 285°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.46 dl/g. The mixture was then discharged to the outside of the reactor to form strands, which were solidified with a cooling liquid and then granulated to have an average weight of about 12 mg to 14 mg to prepare a highly thermally resistant polyester resin.

**Test Example**

**Test Example 1: Composition of the highly thermally resistant polyester resin**

The highly thermally resistant polyester resins of Examples 1 to 5 and Comparative Examples 1 to 5 were each dissolved in a CDCl$_3$ solvent at a concentration of 3 mg/ml. The composition (% by mole) of the highly thermally resistant polyester resin was then measured through a 1H-NMR spectrum obtained using a nuclear magnetic resonance instrument (JEOL, 600 MHz FT-NMR) at 25°C.

**Test Example 2: Glass transition temperature**

The highly thermally resistant polyester resins of Examples 1 to 5 and Comparative Examples 1 to 5 were each measured for the glass transition temperature (Tg) as the first endothermic temperature in the second scan obtained using a differential scanning calorimeter (DSC).
Specifically, the first scan was obtained by raising the temperature from 30°C to 280°C at 10°C/minute and maintaining the temperature at 280°C for 2 minutes, and the second scan was obtained by lowering the temperature from 280°C to 30°C at -300°C/minute, maintaining it for 15 minutes, and then raising the temperature again from 30°C to 280°C at 10°C/minute.

**Test Example 3: Haze**

The highly thermally resistant polyester resins of Examples 1 to 5 and Comparative Examples 1 to 5 were each injection molded to prepare a specimen having a thickness of 6 mm (a length of 37 mm and a width of 37 mm). The specimen was immersed in an airtight container filled with water at 90°C for 7 days. In such an event, the airtight container was placed inside a hot air oven to maintain a temperature of 85°C. The haze (%) before and after the immersion was measured using NDK's Hazemeter NDH7000. Here, in Comparative Example 5, the haze could not be measured since an injection-molded specimen could not be prepared.

In addition, the change in the haze before and after immersion (ΔH, haze after immersion - haze before immersion) was calculated, and the glass transition temperature (Tg) measured in Test Example 2 was used to calculate the value of Relationship 1 (ΔH/Tg).

Test Example 4: **Impact** strength

The highly thermally resistant polyester resins of Examples 1 to 5 and Comparative Examples 1 to 5 were each measured for the impact strength (J/m) according to ASTM D256.

Specifically, each highly thermally resistant polyester resin was injection molded at 270°C to prepare a specimen (width: 63.3 mm, length: 12.5 mm, thickness: 3.2 mm), and a notch of 2.3 mm was formed in the central part of the specimen using a notchmeter according to ISO 2818.

Thereafter, one end of the specimen was fixed, and the other end was impacted with a hammer in the notched direction to measure the impact strength using an impact strength instrument (Product name: NO. 258 PC-S IMPACT TESTER, manufacturer: YASUDA SEIKI SEISAKUSHO, hammer capacity: 5.5 J). Here, it was measured ten times, and the average value was calculated.

Test Example 5: **Intrinsic** viscosity

The highly thermally resistant polyester resins of Examples 1 to 5 and Comparative Examples 1 to 5 were each dissolved in ortho-chlorophenol (OCP) at 150°C at a concentration of 0.12%, and the intrinsic viscosity (IV, dl/g) was measured with an Ubbelohde viscometer in a thermostat at 35°C.

Test Example 6: Processability at **high** temperatures

The highly thermally resistant polyester resins of Examples 1 to 5 and Comparative Examples 1 to 5 were each dried and then injection molded at 270°C to 290°C to prepare an airtight container with a capacity of 500 ml. When the airtight container thus prepared was placed in a microwave oven and heated for 2 minutes at 1,000 W, cooled to room temperature, and then heated again for 2 minutes, it was checked whether the shape of the airtight container was deformed or not. The evaluation was conducted according to the following criteria. Here, in Comparative Example 5, the processability could not be evaluated since an injection-molded specimen could not be prepared.

○: Almost no deformation.

△: Deformation occurred upon second heating.

✕: Deformation occurred upon first heating.

[Table 1]

|  | Ex. 1 | Ex. 2 | Ex. 3 | Ex. 4 | Ex. 5 |
|---|---|---|---|---|---|
| TPA (% by mole) | 100 | 100 | 100 | 95 | 100 |
| IPA (% by mole) | - | - | - | 5 | - |
| ISB (% by mole) | 30 | 28 | 32 | 25 | 39 |
| CHDM (% by mole) | 65 | 72 | 55 | 50 | 50 |
| EG (% by mole) | 5 | - | 13 | 25 | 11 |
| Molar ratio of ISB:CHDM | 1:2.17 | 1:2.57 | 1:1.72 | 1:2 | 1:1.28 |

(continued)

| | Ex. 1 | Ex. 2 | Ex. 3 | Ex. 4 | Ex. 5 |
|---|---|---|---|---|---|
| Tg (°C) | 124 | 122 | 126 | 116 | 134 |
| Haze ($H_1$) (before immersion, %) | 1.22 | 0.8 | 1.5 | 1.1 | 1.4 |
| Haze ($H_2$) (after immersion, %) | 18.5 | 7.3 | 25.7 | 28.0 | 12.1 |
| ΔH (%) | 17.28 | 6.5 | 24.2 | 26.9 | 10.7 |
| ΔH/Tg | 0.14 | 0.05 | 0.19 | 0.23 | 0.08 |
| Impact strength (J/m) | 855 | 854 | 782 | 853 | 772 |
| IV (dl/g) | 0.71 | 0.62 | 0.76 | 0.63 | 0.59 |
| Processability | ○ | ○ | ○ | △ | ○ |

[Table 2]

| | C. Ex. 1 | C. Ex. 2 | C. Ex. 3 | C. Ex. 4 | C. Ex. 5 |
|---|---|---|---|---|---|
| TPA (% by mole) | 100 | 100 | 100 | 100 | 100 |
| IPA (% by mole) | - | - | - | - | - |
| ISB (% by mole) | 10 | 20 | 9 | 27 | 37.5 |
| CHDM (% by mole) | 75 | 65 | 81 | 40 | 62.5 |
| EG (% by mole) | 15 | 15 | 10 | 33 | - |
| Molar ratio of ISB:CHDM | 1:7.5 | 1:3.25 | 1:9 | 1:1.48 | 1:1.67 |
| Tg (°C) | 100 | 112 | 99 | 118 | 133 |
| Haze ($H_1$) (before immersion, %) | 1.9 | 1.6 | 1.9 | 1.8 | Not measurable |
| Haze ($H_2$) (after immersion, %) | 80.3 | 75.9 | 81.2 | 65.0 | |
| ΔH (%) | 78.4 | 74.3 | 79.3 | 63.2 | - |
| ΔH/Tg | 0.78 | 0.67 | 0.80 | 0.51 | - |
| Impact strength (J/m) | 780 | 710 | 702 | 180 | Not measurable |
| IV (dl/g) | 0.72 | 0.66 | 0.76 | 0.54 | 0.46 |
| Processability | × | △ | × | △ | Not measurable |

As can be seen from Tables 1 and 2 above, the highly thermally resistant polyester resins of Examples 1 to 5 had a high glass transition temperature and were excellent in thermal resistance. Thus, they were excellent in all of such characteristics as the change in haze upon immersion in water at 90°C for 7 days, impact strength, and intrinsic viscosity.

Specifically, in the highly thermally resistant polyester resins of Examples 1 to 5, the content and molar ratio of the diol components, particularly isosorbide and cyclohexanedimethanol, were controlled to specific ranges, whereby the glass transition temperature was excellent to be 110°C or higher while the haze value was improved even under high temperature and moisture conditions, and both impact strength and intrinsic viscosity were excellent. In addition, the airtight container prepared using each of the highly thermally resistant polyester resins of Examples 1 to 5, which had excellent processability, did not show any deformation such as distortion of the shape thereof even after the airtight container was heated for the first and second time at 1,000 W of power in a microwave oven.

In contrast, the resins of Comparative Examples 1 to 5 had a glass transition temperature of less than 110°C or a very high haze value under high temperature and moisture conditions, and their impact strengths were also lower than those of Examples 1 to 5. In particular, in Comparative Example 5, the mechanical properties for preparing an injection-molded specimen were not secured; thus, a specimen could not be prepared.

**Claims**

1.  A highly thermally resistant polyester resin, which comprises a repeat unit derived from a diol component; and a repeat unit derived from an acid component, and satisfies the following Relationship 1:

[Relationship 1]

$$0.05 < \Delta H/Tg < 0.5$$

in Relationship 1, $\Delta H$ is the change in the haze before and after immersion (haze after immersion - haze before immersion) of a specimen having a thickness of 6 mm prepared from the highly thermally resistant polyester resin when it is immersed in water at 90°C for 7 days, and Tg is the glass transition temperature of the highly thermally resistant polyester resin.

2. The highly thermally resistant polyester resin of claim 1, wherein the Tg is 110°C or higher.

3. The highly thermally resistant polyester resin of claim 1, wherein the $\Delta H$ is 30% or less.

4. The highly thermally resistant polyester resin of claim 1, wherein the highly thermally resistant polyester resin has an intrinsic viscosity (IV) of 0.55 dl/g or more.

5. The highly thermally resistant polyester resin of claim 1, wherein a specimen having a thickness of 3.2 mm prepared from the highly thermally resistant polyester resin has an impact strength of 700 J/m or more when measured according to ASTM D256.

6. The highly thermally resistant polyester resin of claim 1, wherein the diol component comprises:

   (1) 25% by mole to 45% by mole of a first diol comprising isosorbide (ISB) or a derivative thereof;
   (2) 45% by mole to 75% by mole of a second diol comprising cyclohexanedimethanol (CHDM) or a derivative thereof; and
   (3) 0% by mole to 25% by mole of a third diol different from the first diol and the second diol.

7. The highly thermally resistant polyester resin of claim 6, wherein the molar ratio of the first diol to the second diol is 1:1 to 3.2.

8. The highly thermally resistant polyester resin of claim 6, wherein the third diol comprises at least one selected from the group consisting of bis-2-hydroxyethyl terephthalate, recycled bis-2-hydroxyethyl terephthalate, diethylene glycol, triethylene glycol, 1,2-propanediol, 1,3-propanediol, 1,4-butanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 2,3-butanediol, 3-methyl-1,5-pentanediol, 3-methyl-2,4-pentanediol, 1,6-hexanediol, and derivatives thereof.

9. The highly thermally resistant polyester resin of claim 1, wherein the acid component comprises at least one selected from the group consisting of terephthalic acid, dimethyl terephthalate, isophthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

10. The highly thermally resistant polyester resin of claim 1, wherein the highly thermally resistant polyester resin further comprises at least one additive selected from the group consisting of a colorant, a crystallizing agent, an oxidation stabilizer, and a branching agent.

11. The highly thermally resistant polyester resin of claim 10, wherein the crystallizing agent comprises at least one selected from the group consisting of a crystal nucleating agent, a UV absorber, a polyolefin resin, a polyamide resin, and a polyalkylene resin, and the crystallizing agent is employed in an amount of 0.1 ppm to 10 ppm based on the total weight of the highly thermally resistant polyester resin.

12. The highly thermally resistant polyester resin of claim 10, wherein the oxidation stabilizer comprises at least one selected from the group consisting of hindered phenol-based oxidation stabilizers, phosphorous-based oxidation stabilizers, and thioether-based oxidation stabilizers, and the oxidation stabilizer is employed in an amount of 50 ppm to 2,500 ppm based on the total weight of the highly thermally resistant polyester resin.

13. The highly thermally resistant polyester resin of claim 10, wherein the branching agent comprises at least one selected from the group consisting of trimellitic anhydride, trimethylol propane, and trimellitic acid, and the branching agent is employed in an amount of 100 ppm to 2,500 ppm based on the total weight of the highly thermally resistant polyester resin.

14. A process for preparing the highly thermally resistant polyester resin of claim 1, which comprises:

   (a) preparing a composition comprising a diol component and an acid component;
   (b) subjecting the composition to an esterification reaction at 200°C to 300°C; and
   (c) subjecting the product of the esterification reaction to a polycondensation reaction at a temperature of 220°C to 350°C and a reduced pressure of 0.01 mmHg to 600 mmHg for 1 hour to 24 hours.

15. The process for preparing the highly thermally resistant polyester resin according to claim 14, wherein the molar ratio (G/A) of the diol component to the acid component added in step (a) is 1.10 to 3.00.

16. The process for preparing the highly thermally resistant polyester resin according to claim 14, wherein a catalyst is further added in step (a), and the catalyst comprises a germanium element or a tin element or is a zinc-based catalyst.

17. The process for preparing the highly thermally resistant polyester resin according to claim 14, wherein a stabilizer is further added in step (a), and the stabilizer comprises at least one compound selected from the group consisting of phosphoric acid, trimethyl phosphate, triethyl phosphate, triphenyl phosphate, and triethyl phosphonoacetate.

# EP 4 768 517 A1

## INTERNATIONAL SEARCH REPORT

| International application No. |
|---|
| **PCT/KR2024/012594** |

### A.  CLASSIFICATION OF SUBJECT MATTER

**C08G 63/672**(2006.01)i; **C08G 63/183**(2006.01)i; **C08G 63/199**(2006.01)i; **C08G 63/78**(2006.01)i; **C08G 63/85**(2006.01)i; **C08G 63/83**(2006.01)i; **C08K 5/521**(2006.01)i; **C08K 5/00**(2006.01)i

According to International Patent Classification (IPC) or to both national classification and IPC

### B.  FIELDS SEARCHED

Minimum documentation searched (classification system followed by classification symbols)

C08G 63/672(2006.01); C08G 63/199(2006.01); C08G 63/66(2006.01); C08G 63/664(2006.01); C08G 63/78(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 아이소소바이드(isosorbide), 사이클로헥산디메탄올 (cyclohexane dimethanol), 폴리에스테르 수지(polyester resin)

### C.  DOCUMENTS CONSIDERED TO BE RELEVANT

| Category* | Citation of document, with indication, where appropriate, of the relevant passages | Relevant to claim No. |
|---|---|---|
| X<br>Y | YOON, W. J. et al. Synthesis and characteristics of a biobased high-Tg terpolyester of isosorbide, ethylene glycol, and 1,4-cyclohexane dimethanol: effect of ethylene glycol as a chain linker on polymerization. Macromolecules. 2013, vol. 46, pp. 7219-7231.<br>    See abstract; table 1; formula 2; pages 7220 and 7228; and Experimental section. | 1-9,14-16<br>10-13,17 |
| Y | KR 10-2023-0090831 A (SK CHEMICALS CO., LTD.) 22 June 2023 (2023-06-22)<br>    See abstract; and claim 1. | 10-13,17 |
| A | KR 10-2023-0076609 A (SK CHEMICALS CO., LTD.) 31 May 2023 (2023-05-31)<br>    See claims 8-11; and paragraphs [0107] and [0110]. | 1-17 |
| A | KR 10-2005-0086566 A (EASTMAN CHEMICAL COMPANY) 30 August 2005 (2005-08-30)<br>    See claims 1-8. | 1-17 |

☑ Further documents are listed in the continuation of Box C.      ☑ See patent family annex.

| | | |
|---|---|---|
| *  Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" | document member of the same patent family |
| "P" document published prior to the international filing date but later than the priority date claimed | | |

| Date of the actual completion of the international search | Date of mailing of the international search report |
|---|---|
| **27 November 2024** | **27 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2024/012594** |

| C. | DOCUMENTS CONSIDERED TO BE RELEVANT | |
|---|---|---|
| Category* | Citation of document, with indication, where appropriate, of the relevant passages | Relevant to claim No. |
| A | LEE, S. et al. Microstructure and thermal characteristics of bio-based terpolymer made from terephthalic acid with ethylene glycol, 1,4-cyclohexane dimethanol, and isosorbide. Polymer (Korea). 2015, vol. 39, no. 2, pp. 287-292.<br>See abstract; and Experiment. | 1-17 |

Form PCT/ISA/210 (second sheet) (July 2022)

## INTERNATIONAL SEARCH REPORT
### Information on patent family members

International application No.

**PCT/KR2024/012594**

| Patent document cited in search report | | | Publication date (day/month/year) | Patent family member(s) | | | Publication date (day/month/year) |
|---|---|---|---|---|---|---|---|
| KR | 10-2023-0090831 | A | 22 June 2023 | CN | 118382658 | A | 23 July 2024 |
| | | | | EP | 4450534 | A1 | 23 October 2024 |
| | | | | TW | 202340314 | A | 16 October 2023 |
| | | | | WO | 2023-113509 | A1 | 22 June 2023 |
| KR | 10-2023-0076609 | A | 31 May 2023 | | None | | |
| KR | 10-2005-0086566 | A | 30 August 2005 | CN | 100307235 | C | 28 March 2007 |
| | | | | CN | 100711302 | A | 21 December 2005 |
| | | | | EP | 1560869 | A1 | 10 August 2005 |
| | | | | EP | 1560869 | B1 | 26 July 2006 |
| | | | | JP | 2006-506485 | A | 23 February 2006 |
| | | | | JP | 2006-506485 | A5 | 09 November 2006 |
| | | | | JP | 2011-099118 | A | 19 May 2011 |
| | | | | JP | 2014-240504 | A | 25 December 2014 |
| | | | | JP | 2016-094613 | A | 26 May 2016 |
| | | | | JP | 2017-197750 | A | 02 November 2017 |
| | | | | JP | 5184739 | B2 | 17 April 2013 |
| | | | | JP | 6034350 | B2 | 30 November 2016 |
| | | | | JP | 6522688 | B2 | 29 May 2019 |
| | | | | KR | 10-1058974 | B1 | 23 August 2011 |
| | | | | KR | 10-1058989 | B1 | 23 August 2011 |
| | | | | KR | 10-1081064 | B1 | 07 November 2011 |
| | | | | KR | 10-2010-0024502 | A | 05 March 2010 |
| | | | | KR | 10-2011-0036123 | A | 06 April 2011 |
| | | | | US | 2004-0092703 | A1 | 13 May 2004 |
| | | | | US | 6914120 | B2 | 05 July 2005 |
| | | | | WO | 2004-044032 | A1 | 27 May 2004 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20190064304